# EUROPEAN PATENT APPLICATION

(11) **EP 3 858 653 A1**
(43) Date of publication of application: **04.08.2021**
(21) Application number: 20315011.5
(22) Date of filing: 31.01.2020
(51) Int. Cl.: B60L 3/00, H02K 16/00

(54) **ELECTRIC MOTOR**

(71) Applicant: AIRBUS HELICOPTERS, 13725 Marignane Cedex (FR); AIRBUS HELICOPTERS DEUTSCHLAND GmbH, 86609 Donauwörth (DE)
(72) Inventor: Bammer, Benedikt, 83727 Schliersee (DE); Mariotto, Damien, 13100 Aix en Provence (FR)
(74) Representative: GPI Brevets

(57) **Abstract**

An electric motor comprises an axial output shaft configured to deliver mechanical power by rotation; a first electric sub-machine having a first rotor and a first stator, the first rotor and the first stator being arranged concentrically around the axial output shaft and facing each other radially and/or axially, the first rotor being axially rotatable relative to the first stator; and a second electric sub-machine having a second rotor and a second stator, the second rotor and the second stator being arranged concentrically around the first electric sub-machine and facing each other radially and/or axially, the second rotor being axially rotatable relative to the second stator; wherein the first rotor is coupled to the axial output shaft via a first transmission device configured to disengage the first rotor from the axial output shaft when the axial output shaft rotates faster than the first rotor; and wherein the second rotor is coupled to the axial output shaft via a second transmission device configured to disengage the second rotor from the axial output shaft when the axial output shaft rotates faster than the second rotor.

## Description

The present invention pertains to an electric motor and an aircraft or spacecraft equipped with such an electric motor.

Many electric motors operate through the interaction between a magnetic field and an electric current in a wire winding to generate force in the form of rotation of an output shaft in order to convert electrical energy to mechanical power. With an increased focus on electrification of aircraft, there is a need to provide electric machines with increased reliability, high power density (reduced weight) and increased compactness for integration. In short, electric machines for aeronautical propulsion ideally feature redundancy, low weight and compactness.

The most basic configuration for an electric machine has a so-called simplex machine architecture with one channel of power transmission. This type of machine by definition is not redundant, which means that the reliability of the main function (provision of power) is not optimal. Duplex machine architectures (dual channel of power transmission) on the other hand are considered to be redundant (fail safe or fault tolerant) and are characterized by a better reliability. However, the improved reliability usually will be at the expense of the compactness and thus the weight of the machine compared to a simplex system. More complex architectures (triplex, quadruplex, etc.) can further improve the overall reliability over simplex systems.

For example, a permanent magnet synchronous machine (PMSM) can have six phases and thus can be operated in five, four, three or two phases in case of phase failure. This principle is not redundant (i.e. simplex architecture) because a winding short-circuit can lead to high short-circuit current and high resistance torque on the output shaft and thus to a failure of the system.

Another example is a double winding PMSM with two winding circuits inside the respective machine, wherein stator winding circuits can be divided into multiple different configurations. This principle is also not considered to be redundant (simplex architecture) due to the direct interaction between rotor and failed stator winding as well as the interaction between the two winding circuits, which can also lead to a failure of the system.

As another variant, a duplex system can be envisaged comprising two fully redundant machines, which are both connected via a gear box to an output shaft. This approach could be considered as fully redundant (duplex architecture) as a winding short-circuit would lead to the disconnection of the faulty machine. By consequence such an approach improves the overall system reliability. However, system size, efficiency and complexity would be significantly increased (two machines, thus increased integration diameter, as well as an additional gear box) and power density reduced (overall weight of two machines and gear box).

Prior art document EP 2896532 describes a device consisting of at least two machines connected to two inverters coupled to an output shaft (via e.g. a gear box) with a double winding for each machine. In case of one winding failure, the remaining winding circuit could still be operated via the other inverter. However, an internal winding short-circuit is not taken into account, which potentially could lead to a failure of the system.

Prior art document DE 102016221304 describes a device with at least two machines arranged one after the other along an axial direction (based on shaft orientation) and connected to an output shaft via two freewheel devices. This enables to disconnect the faulty machine from the output shaft via one of the freewheel devices and, by consequence, to improve the overall system reliability as one single failure will not lead to the complete loss of the function.

Prior art document WO 2018/219904 describes a system with at least two machines and an air gap variation between rotors and stator, which is controlled by a displacement device enabling to deactivate the faulty machine by moving the rotor and by consequence increasing the airgap.

Prior art document US 2017/179800 describes two machines composed with one stator but with two winding circuits on each radial extremity and two rotors facing each stator extremity. The rotors are either connected on a common shaft or disposed on two separated shafts. Due to the direct interaction between two winding circuits over the same stator core, any internal winding short-circuit will lead to its own short-circuit current as well as a second winding short-circuit current.

Prior art document CN 108400689 describes two machines composed with two stators each positioned concentrically from each other with two winding circuits on each radial extremity and two rotors facing each stator extremity (inner and outer). The two stators are magnetically independent and enable to drive two independent rotors linked to two shafts.

Against this background, it is an object of the present invention to find reliable and redundant solutions for electric motors, which are compact, light-weight and efficient.

This object is achieved by an electric motor having the features of claim 1 and an aircraft or spacecraft having the features of claim 15.

According to an aspect of the invention, an electric motor comprises an axial output shaft configured to deliver mechanical power by rotation; a first electric sub-machine having a first rotor and a first stator, the first rotor and the first stator being arranged concentrically around the axial output shaft and facing each other radially and/or axially, the first rotor being axially rotatable relative to the first stator; and a second electric sub-machine having a second rotor and a second stator, the second rotor and the second stator being arranged concentrically around the first electric sub-machine and facing each other radially and/or axially, the second rotor being axially rotatable relative to the second stator; wherein the first rotor is coupled to the axial output shaft via a first transmission device configured to disengage the first rotor from the axial output shaft when the axial output shaft rotates faster than the first rotor; and wherein the second rotor is coupled to the axial output shaft via a second transmission device con-figured to disengage the second rotor from the axial output shaft when the axial output shaft rotates faster than the second rotor.

According to another aspect of the invention, an aircraft or spacecraft has an electric motor according to the invention, wherein the electric motor is configured to power the aircraft or spacecraft.

Thus, one idea of the present invention is to provide at least two separate electric machines in a concentric configuration around a single central output shaft, wherein each of the at least two electric machines is coupled to the output shaft and thus is able to drive the output shaft independently from the other. Concentric in this case means that the second electric sub-machine is located radially outward from the first electric machine with respect to the axial output shaft. The respective rotors are consequently also arranged concentrically with respect to each other and rotate in synchronous movement with the axial output shaft around an axial direction defined by the axial output shaft. To this end, the rotors may be mechanically and electromagnetically decoupled from each other. Both of these electric sub-machines are coupled individually to the output shaft via a respective transmission device, which decouples the respective electric sub-machine from the output shaft in case the electric sub-machine is not able to uphold the rotation of the output shaft, i.e. the electric sub-machine cannot provide the required mechanical power and thus the required rotational speed at its rotor. This means that each electric sub-machine gets decoupled from the output shaft automatically in case of a failure. The respective other electric sub-machine (or machines in case of more than two electric sub-machines) are still coupled to the output shaft and thus can still drive the output shaft.

Hence, as a result, a fully redundant electric machine is provided. Due to the concentric configuration of the invention, the electric machine can be provided in a compact, light-weight and efficient arrangement. The invention may be connected directly to a propeller or a fan or may more generally be part of a propulsion chain and may be connected to gear-box. For example, the invention may be used for the following electric propulsion fields where high reliability is sought: rotorcraft, drones, large aircraft, regional aircraft, business jet, military aircraft etc.

A transmission device within the meaning of the present invention comprises any device coupling a rotor to an axial output shaft for mechanical power transmission in such a way that the rotor is decoupled automatically from the axial output shaft upon failure of the rotor, i.e. as soon as the rotor cannot uphold its rotational movement while driving the axial output shaft. Thus, the rotors may be coupled to the axial output shaft via a mechanical freewheel device, e.g. an overrunning clutch, so that each rotor may be mechanically coupled to the same axial output shaft with high reliability, power density and compactness. However, also different types of transmission devices may be utilized like electro-magnetic clutches or any other device that is able to mechanically decouple two rotating parts from each other upon failure detection.

Advantageous embodiments and improvements of the present invention are found in the subordinate claims.

According to an embodiment of the invention, the stators may be magnetically decoupled from each other. Thus, safety and reliability may be improved in case of short-circuiting of the rotor and/or stator windings.

According to an embodiment of the invention, the stators may be separated by a magnetic insulation layer. For example, a layer of permalloy or another suitable material may be used around the first stator radially inward from the second stator to collect and thus contain the magnetic field of the first stator. In another example, an electromagnetically insulating material may be used to electromagnetically decouple the stators from each other.

According to an embodiment of the invention, the stators may be separated by an air gap. Thus, the stators may be separated in a radial direction from each other by physical separation using air, which creates a natural magnetic barrier and by consequence enables the magnetic independence of each stator.

According to an embodiment of the invention, the electric motor may further comprise a joint stator casing, on which the stators are mounted together. For example, the stators may be mounted to the joint stator casing at an axial end of the system. The respective other axial end may then be used, for example, to integrate the transmission mechanisms of each sub-machine for coupling them to the central output shaft.

According to an embodiment of the invention, each electric sub-machine may be configured to provide at least a respective fraction of a total output power of the axial output shaft. For example, a first sub-machine may provide 40% of the total output power while a second sub-machine may provide 60% of the total output power under normal operation.

According to an embodiment of the invention, each electric sub-machine may be configured to provide at least half of the total output power of the axial output shaft. The system thus may be subdivided into two electric machines of equal output power. If one of these sub-machines fails, the system is still able to deliver at least half of the total output power.

According to an embodiment of the invention, at least one of the electric sub-machines may be configured to provide more than the respective fraction of the total output power of the axial output shaft for the duration of a limited failure time period. For example, each sub-machine may provide (at least) 50% in normal operation. In case of a failure, the remaining sub-machine may however provide more than 50% (up to 100%) of the total output power to enable the aircraft to finish, in safe condition, the end of his mission, to return to the base, or to land as soon as practicable. The specific power fraction and time duration may depend on the application and the associated safety analysis.

According to an embodiment of the invention, at least one of the electric sub-machines may be configured to provide more than half of the total output power of the axial output shaft for the duration of the limited failure time period.

According to an embodiment of the invention, the electric motor may further comprise a control unit configured to control power output of the electric sub-machines. The control unit may be configured to detect a failure of one of the electric sub-machines and increase the power output of a respective other electric sub-machine at least for the duration of a limited failure time period.

According to an embodiment of the invention, the electric motor may further comprise at least a third electric sub-machine having a third rotor and a third stator. The third rotor and the third stator may be arranged concentrically around the second electric sub-machine and face each other radially. The third rotor may be axially rotatable relative to the third stator. The third rotor may be coupled to the axial output shaft via a third transmission device configured to disengage the third rotor from the axial output shaft when the axial output shaft rotates faster than the third rotor.

Hence, three, four or more electric sub-machines by be arranged like an onionskin around the axial output shaft. Thus the principle of the invention can be extended to multiple sub-machines to improve redundancy figures and degraded operation, in case of one sub-machine failure. For example in case of three sub-machines, each sub-machine could be sized to provide 33% of the power, thus achieving three times the reliability of a simplex architecture. In case of a failure, the system could still provide 66% of the power.

According to an embodiment of the invention, the electric motor may be configured as a radial flux machine, an axial flux machine and/or a transverse flux machine. In principal, the invention is applicable to all basic types of electric machines, as for example radial flux machines and axial flux machines. However other type of machines (e.g. transverse flux machine), or a combination of such machines, could be implemented as well.

According to an embodiment of the invention, the electric motor may be configured as a permanent magnet machine. For example, the rotors may be provided with permanent magnets for better power density. However, also different types may be utilized like wounded or squirrel-cage arrangements.

According to an embodiment of the invention, the transmission devices may be configured as a mechanical freewheel device and/or an electro-magnetic clutch and/or similar.

The invention will be explained in greater detail with reference to exemplary embodiments depicted in the drawings as appended.

The accompanying drawings are included to provide a further understanding of the present invention and are incorporated in and constitute a part of this specification. The drawings illustrate the embodiments of the present invention and together with the description serve to explain the principles of the invention. Other embodiments of the present invention and many of the intended advantages of the present invention will be readily appreciated as they become better understood by reference to the following detailed description. The elements of the drawings are not necessarily to scale relative to each other. In the figures, like reference numerals denote like or functionally like components, unless indicated otherwise.
Fig. 1 schematically depicts a cross-sectional side-view along an axial direction of an electric motor according to an embodiment of the invention.
Fig. 2 schematically depicts a cross-sectional side-view along an axial direction of an electric motor according to another embodiment of the invention.
Fig. 3 schematically depicts a cross-sectional side-view along an axial direction of an electric motor according to yet another embodiment of the invention.
Fig. 4 schematically depicts a cross-sectional side-view along an axial direction of an electric motor according to another embodiment of the invention.
Fig. 5 depicts a detailed cross-sectional side-view along an axial direction of an electric motor according to yet another embodiment of the invention.
Fig. 6 shows a cross-section of the electric motor of Fig. 5 along a radial direction.
Figs. 7 and 8 show the electric motor of Fig. 5 and 6 in perspective view from different axial ends.
Fig. 9 schematically depicts a cross-sectional side-view along an axial direction of an electric motor according to another embodiment of the invention.
Fig. 10 schematically depicts a cross-sectional side-view along an axial direction of an electric motor according to yet another embodiment of the invention.
Fig. 11 schematically depicts a cross-sectional side-view along an axial direction of an electric motor according to another embodiment of the invention.
Fig. 12 schematically depicts a cross-sectional side-view along an axial direction of an electric motor according to yet another embodiment of the invention.
Fig. 13 schematically depicts a cross-sectional side-view along an axial direction of an electric motor according to another embodiment of the invention.
Fig. 14 shows an aircraft with an electric motor of one of the Figs. 1 to 13.

Although specific embodiments are illustrated and described herein, it will be appreciated by those of ordinary skill in the art that a variety of alternate and/or equivalent implementations may be substituted for the specific embodiments shown and described without departing from the scope of the present invention. Generally, this application is intended to cover any adaptations or variations of the specific embodiments discussed herein.

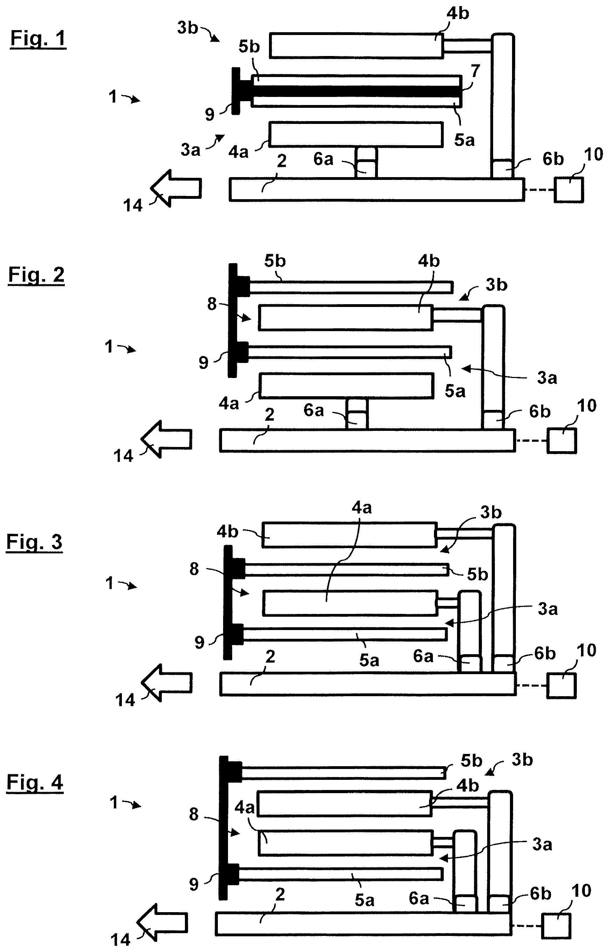

Figure 1 schematically depicts a cross-sectional side-view along an axial direction of an electric motor 1 according to an embodiment of the invention.

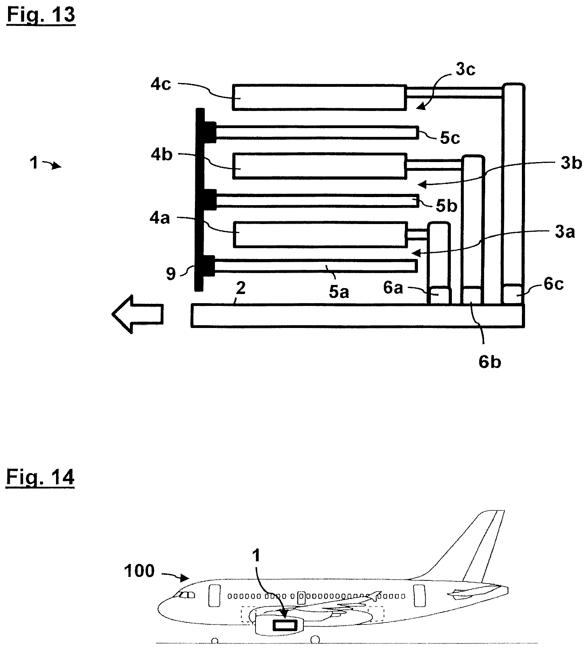

The electric motor 1 is configured as a redundant and compact electric machine for driving a means of aeronautical propulsion with increased reliability, high power density, i.e. reduced weight, and increased compactness for integration. For example, the electric motor 1 can be used in electric propulsion applications where high reliability is sought, like for example rotorcraft, large aircraft, regional aircraft and so on. As an example, Fig. 14 depicts a passenger aircraft 100, which is equipped with several electric motors 1 of this kind for electric propulsion.

The electric motor 1 comprises an axial output shaft 2 configured to deliver mechanical power by rotation around an axial direction 14 (cf. arrow in Fig. 1). The axial output shaft 2 may be connected directly to a propeller, a fan or similar, and may more generally be part of a propulsion chain and may be connected to a gear-box or the like (not depicted).

The axial output shaft 2 is driven in this example by two electric sub-machines 3a, 3b, as will be explained in the following. It is understood however, that more than two electric sub-machines may be integrated in a similar way in other embodiments (cf. Fig. 13 as one example). In the exemplary embodiment of Fig. 1, a first electric sub-machine 3a has a first rotor 4a and a first stator 5a. The first rotor 4a and the first stator 5a are arranged concentrically around the axial output shaft 2 and face each other in a radial direction, i.e. perpendicular to the axial direction 14 defined by the axial output shat 2. The first rotor 4a is axially rotatable relative to the first stator 5a, i.e. the electric sub-machine 3a is configured as a rotating electric machine. In a similar vein, the second electric sub-machine 3b also has a second rotor 4b and a second stator 5b, which face each other radially. Also in this case the second rotor 4b is axially rotatable relative to the second stator 5b. However, the second rotor 4b and a second stator 5b, and thus the sub-machine 3b comprising these elements, are arranged concentrically around the first electric sub-machine 3a.

The electric motor 1 may be configured as a permanent magnet machine. For example, the stators 5a, 5b may be configured with stator winding circuits while the rotors 4a, 4b may be equipped with permanent magnets. The rotors 4a, 4b may be mechanically and electromagnetically decoupled from each other and configured concentrically relative to each other. The rotors 4a, 4b may rotate in synchronous movement around the axial direction 14 during normal operation. To this end, the electric motor 1 comprises a control unit 10, which manages power output of the electric sub-machines 3a, 3b. For example, the control unit 10 may comprise and/or be coupled with two independent inverters with identical pulse width modulation (in synchronisation between the two inverters) in order to drive both rotors 4a, 4b in synchronous rotation.

The stators 5a, 5b on the other hand may also be magnetically decoupled from each other. In the particular example of Fig. 1, the stators 5a, 5b are radially separated by a magnetic insulation layer 7 and are mounted together to a joint stator casing 9.

In order to transfer mechanical power from the electric sub-machines 3a, 3b to the axial output shaft 2, the first rotor 4a is mechanically coupled to the axial output shaft 2 via a first transmission device 6a and the second rotor 4b is mechanically coupled to the axial output shaft 2 via a second transmission device 6b. The first transmission device 6a is configured to disengage the first rotor 4a from the axial output shaft 2 when the axial output shaft 2 rotates faster than the first rotor 4a. In a similar vein, the second transmission device 6 is configured to disengage the second rotor 4b from the axial output shaft 2 when the axial output shaft 2 rotates faster than the second rotor 4b. The transmission devices 6a, 6b are configured as a mechanical freewheel device. However, in other embodiments, the transmission devices 6a, 6b may also be of different types, like electro-magnetic clutch or other device that could mechanically decouple two rotating parts upon failure detection.

Hence, each rotor 4a, 4b is connected to the axial output shaft 2, which rotates in synchronous movement with the rotors 4a, 4b around the axial direction 14 under normal operation. Thus, electric power is transformed by the electric sub-machines 3a, 3b to mechanical power, which is then transferred via the axial output shaft 2 in order to drive, for example, a propeller, a fan, a gear box or similar for electric propulsion of aircraft.

During normal operation the transmission devices 6a, 6b of the two rotors 4a, 4b are activated (clutched) and not rotating relative to the axial output shaft 2 (i.e. they rotating synchronously with the axial output shaft 2). Each electric sub-machine 3a, 3b is configured to provide at least a respective fraction of a total output power of the axial output shaft 2. For example, each electric sub-machine 3a, 3b may be configured to provide half of the total output power of the axial output shaft 2 under normal operation. Thus, 50 % of the total power is transferred from each stator 5a, 5b to the respective rotor 4a, 4b and from there mechanically to the axial output shaft 2, which delivers the total output power, i.e. 100 %.

In case of a failure or fault of one of the electric sub-machines 3a, 3b, e.g. due to short-circuit, mechanical jamming, bearing failure, etc., a differential speed between the axial output shaft 2 and the failed sub-machine rotor 4a, 4b will be generated, as the failing electric sub-machine 3a, 3b cannot uphold the necessary rotational speed for keeping up with the rotation of the axial output shaft 2. Such an event then triggers the deactivation (declutching) of the associated transmission device 6a, 6b. As a result, the failed sub-machine 3a, 3b will be decoupled from the remaining power chain between the stators 5a, 5b and the axial output shaft 2. Hence, the failing electric sub-machine 3a, 3b will be naturally stopped by the failed part. The healthy electric sub-machine 3a, 3b on the other hand will still be able to provide power without any interaction with the failed parts. In the above example, the electric motor 1 will thus still be able to provide 50% of the total power output.

However, at least one of the electric sub-machines 3a, 3b may also be configured to provide more than the respective fraction of the total output power of the axial output shaft 2 for the duration of a limited failure time period. In the above example, both electric sub-machines 3a, 3b may particularly be configured to provide more than half of the total output power of the axial output shaft 2 for the duration of the limited failure time period, e.g. 60 %, 70 % or up to 100 % for a limited period of time, e.g. on the order of minutes (the exact level may depend on the sizing of the machines for such exceptional situations). To this end, the control unit 10 may be configured to detect a failure of one of the electric sub-machines 3a, 3b (decoupling of the respective transmission device 6a, 6b) and increase the power output of the respective other electric sub-machine 3a, 3b at least for the duration of the limited failure time period. For example, the electric sub-machines 3a, 3b may be sized so that they can deliver 50 % under normal operation and from 50 % up to 100 % in short time during failure operation enabling the aircraft 100 to perform a safe landing with only one sub-machine 3a, 3b remaining.

The electric motor 1 of Fig. 1 is configured as a radial flux machine, i.e. the rotors 4a, 4b face the respective stators 5a, 5b radially. Fig. 1 shows one exemplary configuration of the rotors 4a, 4b and stators 5a, 5b. Alternative configurations are shown in Figs. 2 to 4, which differ from the one in Fig. 1 in the relative arrangement of the rotors 4a, 4b and the stators 5a, 5b. In the embodiments of Fig. 2 to 4, the stators 5a, 5b are not separated by a magnetic insulation layer 7 as in Fig. 1 but are physical separated from each other via an air gap 8 in the radial direction, which creates a natural magnetic barrier and by consequence enables the magnetic independence of each stator 5a, 5b.

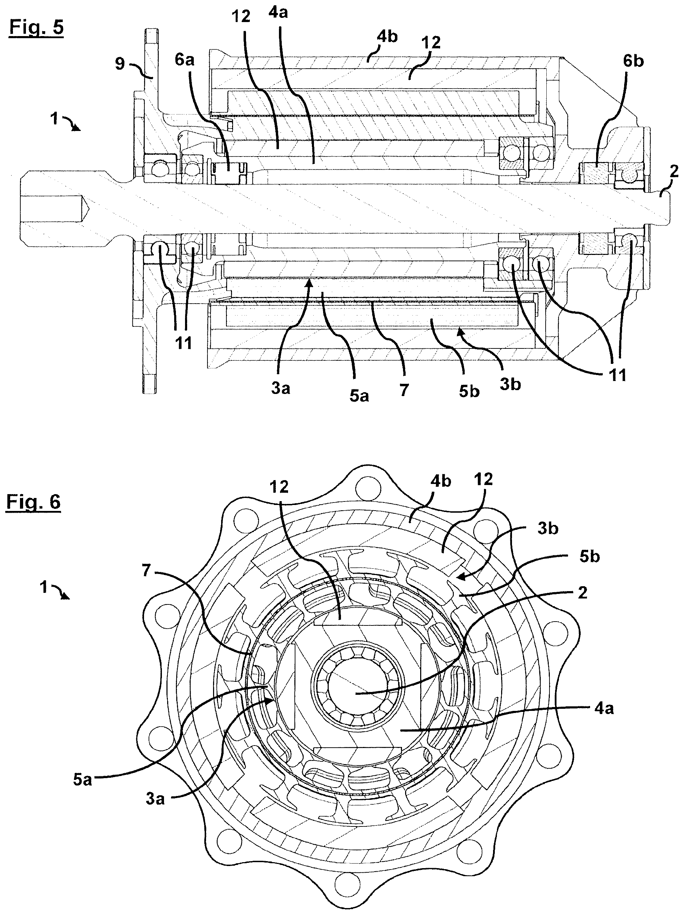

Figs. 5 to 8 depict a variant of the electric motor 1 of Fig. 1 in more detail. The electric motor 1 is also configured as a radial flux machine, in which the rotors 4a, 4b and the stators 5a, 5b of the respective electric sub-machines 3a, 3b are arranged concentrically around the axial output shaft 2. As in Fig. 1, the stators 5a, 5b are mounted together on a joint stator casing 9 and are separated radially by a magnetic insulation layer 7. The rotors 4a, 4b are provided with permanent rotor magnets 12 and are coupled to the axial output shaft 2 via respective transmission devices 6a, 6b as in the embodiment of Fig. 1, e.g. mechanical freewheel devices.

Fig. 5 additionally shows various bearings 11, by means of which the rotors 4a, 4b and stators 5a, 5b are mounted to the axial output shaft 2 and to each other. Under normal operation, the rotors 4a, 4b move synchronously with the axial output shaft 2 so that there is no relative movement at the associated bearings (due to the activation by the transmission device). As a consequence, their life time is increased and maintenance is kept at a minimal level. In case of a failure of one of the electric sub-machines 3a, 3b, there will be a rotational movement at the bearing 11 between the respective rotor 4a, 4b and the axial output shaft 2. The transmission devices 6a, 6b and the bearings 11 may be configured to withstand the high rotation speed during failure operation only for a limited time.

The bearings 11 may be self-lubricated with grease but, for high rotation speed, lubrication systems may also be integrated. The transmission devices 6a, 6b on the other hand may be lubricated by an oil lubrication system (including pump, lance, tank, sensors etc, which are not described here) to remove friction losses (generated in case of deactivation/declutching) and to prevent quick and high temperature increase potentially degrading the components. Oil used in the lubrication system could be managed by either the electric motor 1 itself or, for example, a connected gear box. Bearings of the transmission devices 6a, 6b may be lubricated with this oil going through the transmission devices 6a, 6b.

The lubrication configuration could be either vertical or horizontal depending on the application and the space envelope. The oil can be injected by a lance or similar, which may spray the oil into the rotors 4a, 4b and/or the axial output shaft 2, e.g. through the transmission devices 6a, 6b. However, the oil may also be injected direct through the bearings 11. The oil may be distributed via gravity (in case of a vertical configuration) or via centrifugal forces (in a horizontal configuration) and may flow through the bearings 11 and transmission devices 6a, 6b from the first rotor 4a to the second rotor 4b through the output shaft 2 and from there into a lubrication outlet. Drainage holes could be added to ensure a better evacuation of the oil and efficiency of the system.

Oil outlets may lead into a gearbox (in case of a gear box connection) or an oil reservoir (in case of propeller/fan connection) and then pumped back into the oil circuit. Such a pump could be driven directly by the electric motor 1 and/or the respective gearbox shaft to ensure high reliability, or by other electric devices. To keep the oil in the rotors 4a, 4b, even in case that one has stopped and the other is still rotating, the oil may be sealed and secured by a baffler, sealing or an o-ring between the rotors 4a, 4b.

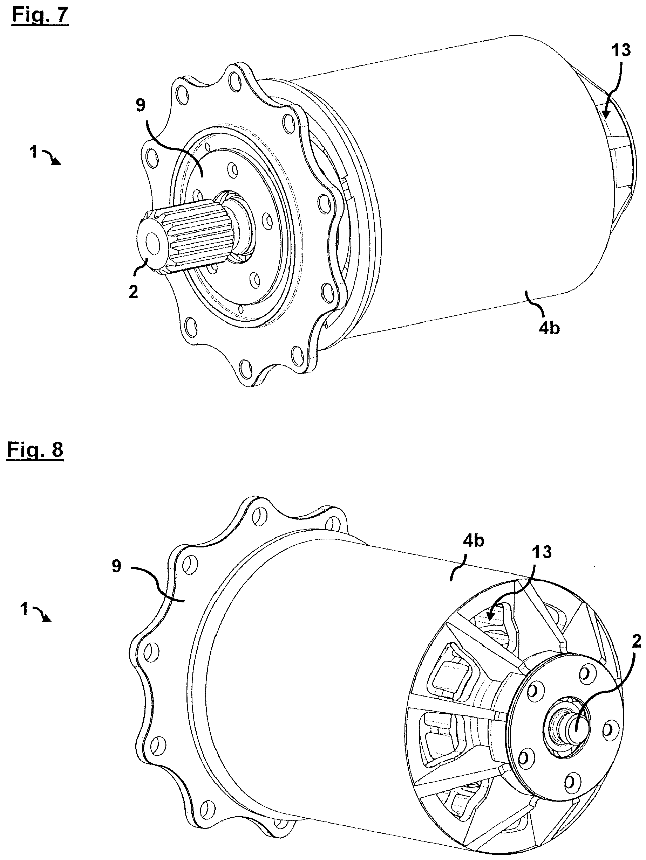

Both electric sub-machines 3a, 3b may be air-cooled by a separate or direct driven fan, by another device or even with the headwind of the aircraft 100, which may blow air through rotor 4a, 4b and stator 5a, 5b via dedicated air cooling cut-outs 13, e.g. in the rotors 4a, 4b (cf. Figs. 7 and 8). The electric sub-machines 3a, 3b may also be cooled by a liquid cooling system separated from or connected to a lubrication system. Furthermore, lubrication oil in the rotors 4a, 4b may have a cooling effect. If the oil is cooled down by a heat exchanger or intercooler, the cooling effect and thus the efficiency of the electric motor 1 may be increased.

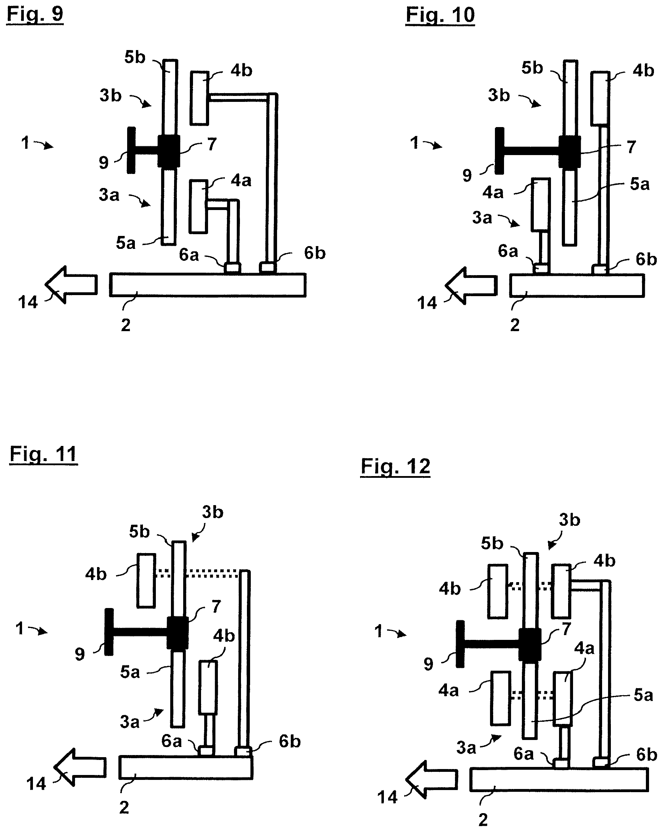

Figs. 1 to 8 depict configurations of an electric motor 1 as a radial flux machine. Axial flux machines on the other hand have, in theory, a better torque density than radial flux machines. However, they are usually rotating at low speed and are not adapted to high speed due to the more complex assembly and correct balancing of the respective rotors. Nevertheless, the invention may also be applied to such topologies as exemplarily shown in Figs. 9 to 12. In these examples, the rotors 4a, 4b and stators 5b, 5b face each other axially and not radially as for radial flux machines. Apart from that, the embodiments of Figs. 9 to 12 are similar in configuration to the radial flux machines of Figs. 1 to 8.

Moreover, the described principle may be extended to multiple sub-machines (≥2) to improve redundancy figures and degraded operation, in case of one sub-machine failure. As an example, Fig. 13 depicts an electric motor 1 with three electric sub-machines 3a, 3b, 3c arranged one after the other around a central axial output shaft 2 in a similar vein as in the exemplary embodiment of Fig. 3. In case of such an assembly, each electric sub-machine 3a, 3b, 3c may be sized to provide 33 % of the total output power. Thus the reliability can be increased compare to a simplex architecture by a factor of three. In case of a failure of one of the electric sub-machines 3a, 3b, 3c, the system could still provide 66 % of the power.

As the transmission devices (they are always activated) and respective bearings are dormant in normal operation, a specific Power-Built-In-Test (PBIT) may be launched at the start of the respective aircraft. This enables to test any dormant failures of the transmission devices and the transmission device bearings and ensures their availability. This PBIT may comprise sequentially activating one of the electric sub-machines after the other while the respective other(s) is(are) "physically" stopped (e.g. by intentionally short-circuiting the three phases via closure of three phase inverter transistors). Health monitoring (T°C, speed, current) could be performed to check the functioning of transmission devices and transmission device bearings.

In the foregoing detailed description, various features are grouped together in one or more examples or examples with the purpose of streamlining the disclosure. It is to be understood that the above description is intended to be illustrative, and not restrictive. It is intended to cover all alternatives, modifications and equivalents. Many other examples will be apparent to one skilled in the art upon reviewing the above specification. The embodiments were chosen and described in order to best explain the principles of the invention and its practical applications, to thereby enable others skilled in the art to best utilize the invention and various embodiments with various modifications as are suited to the particular use contemplated.

### List of reference signs

- 1: electric motor
- 2: axial output shaft
- 3a: first electric sub-machine
- 3b: second electric sub-machine
- 3c: third electric sub-machine
- 4a: first rotor
- 4b: second rotor
- 4c: third rotor
- 5a: first stator
- 5b: second stator
- 5c: third stator
- 6a: first transmission device
- 6b: second transmission device
- 6c: third transmission device
- 7: magnetic insulation layer
- 8: air gap
- 9: joint stator casing
- 10: control unit
- 11: bearing
- 12: permanent rotor magnet
- 13: air cooling cut-out
- 14: axial direction
- 100: aircraft

## Claims

1. Electric motor (1), comprising:
- an axial output shaft (2) configured to deliver mechanical power by rotation;
- a first electric sub-machine (3a) having a first rotor (4a) and a first stator (5a), the first rotor (4a) and the first stator (5a) being arranged concentrically around the axial output shaft (2) and facing each other radially and/or axially, the first rotor (4a) being axially rotatable relative to the first stator (5a); and
- a second electric sub-machine (3b) having a second rotor (4b) and a second stator (5b), the second rotor (4b) and the second stator (5b) being arranged concentrically around the first electric sub-machine (3a) and facing each other radially and/or axially, the second rotor (4b) being axially rotatable relative to the second stator (5b);
wherein the first rotor (4a) is coupled to the axial output shaft (2) via a first transmission device (6a) configured to disengage the first rotor (4a) from the axial output shaft (2) when the axial output shaft (2) rotates faster than the first rotor (4a); and
wherein the second rotor (4b) is coupled to the axial output shaft (2) via a second transmission device (6b) configured to disengage the second rotor (4b) from the axial output shaft (2) when the axial output shaft (2) rotates faster than the second rotor (4b).

2. Electric motor (1) according to claim 1, wherein the stators (5a, 5b) are magnetically decoupled from each other.

3. Electric motor (1) according to claim 1 or 2, wherein the stators (5a, 5b) are radially separated by a magnetic insulation layer (7).

4. Electric motor (1) according to claim 1 or 2, wherein the stators (5a, 5b) are radially separated by an air gap (8).

5. Electric motor (1) according to one of the claims 1 to 4, further comprising a joint stator casing (9), on which the stators (5a, 5b) are mounted together.

6. Electric motor (1) according to one of the claims 1 to 5, wherein each electric sub-machine (3a, 3b) is configured to provide at least a respective fraction of a total output power of the axial output shaft (2).

7. Electric motor (1) according to claim 6, wherein each electric sub-machine (3a, 3b) is configured to provide at least half of the total output power of the axial output shaft (2).

8. Electric motor (1) according to claim 6 or 7, wherein at least one of the electric sub-machines (3a, 3b) is configured to provide more than the respective fraction of the total output power of the axial output shaft (2) for the duration of a limited failure time period.

9. Electric motor (1) according to claim 8, wherein at least one of the electric sub-machines (3a, 3b) is configured to provide more than half of the total output power of the axial output shaft (2) for the duration of the limited failure time period.

10. Electric motor (1) according to one of the claims 1 to 9, further comprising:
a control unit (10) configured to control power output of the electric sub-machines (3a, 3b), wherein the control unit (10) is configured to detect a failure of one of the electric sub-machines (3a, 3b) and increase the power output of a respective other electric sub-machine (3a, 3b) at least for the duration of a limited failure time period.

11. Electric motor (1) according to one of the claims 1 to 10, further comprising:
at least a third electric sub-machine (3c) having a third rotor (4c) and a third stator (5c), the third rotor (4c) and the third stator (5c) being arranged concentrically around the second electric sub-machine (3b) and facing each other radially, the third rotor (4c) being axially rotatable relative to the third stator (5c), wherein the third rotor (4c) is coupled to the axial output shaft (2) via a third transmission device (6c) configured to disengage the third rotor (4c) from the axial output shaft (2) when the axial output shaft (2) rotates faster than the third rotor (4c).

12. Electric motor (1) according to one of the claims 1 to 11, wherein the electric motor (1) is configured as at least one of a radial flux machine, an axial flux machine and a transverse flux machine.

13. Electric motor (1) according to one of the claims 1 to 12, wherein the electric motor (1) is configured as a permanent magnet machine.

14. Electric motor (1) according to one of the claims 1 to 13, wherein the transmission devices (6a, 6b, 6c) are configured as at least one of a mechanical freewheel device and an electro-magnetic clutch.

15. Aircraft or spacecraft (100) having an electric motor (1) according to one of the claims 1 to 14, wherein the electric motor (1) is configured to power the aircraft or spacecraft (100).
